(19) Europäisches Patentamt
European Patent Office
Office européen des brevets

(11) EP 2 352 194 A1

(12) EUROPEAN PATENT APPLICATION
published in accordance with Art. 153(4) EPC

(43) Date of publication:
03.08.2011 Bulletin 2011/31

(51) Int Cl.:
$H01M\ 4/86$ (2006.01)     $H01M\ 8/10$ (2006.01)

(21) Application number: 10823201.8

(22) Date of filing: 14.10.2010

(86) International application number:
PCT/JP2010/006100

(87) International publication number:
WO 2011/045933 (21.04.2011 Gazette 2011/16)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 16.10.2009 JP 2009239417

(71) Applicant: Panasonic Corporation
Kadoma-shi
Osaka 571-8501 (JP)

(72) Inventor: UEDA, Hideyuki
1-61 Shiromi 2-chome,
Chuo-ku, Osaka-shi
Osaka
540-6207 (JP)

(74) Representative: TBK
Bavariaring 4-6
80336 München (DE)

(54) MEMBRANE ELECTRODE ASSEMBLY FOR FUEL CELL, AND FUEL CELL UTILIZING SAME

(57) A membrane electrode assembly for a fuel cell includes an anode, a cathode, and an electrolyte membrane disposed between the anode and the cathode. The cathode includes a cathode catalyst layer and a cathode diffusion layer disposed on the cathode catalyst layer. The cathode diffusion layer includes a conductive porous substrate and a porous composite layer disposed on a surface of the conductive porous substrate. The porous composite layer includes conductive carbon particles and a water-repellent binding material. The cathode diffusion layer has a plurality of through pores having a largest pore diameter of 15 to 20.5 μm and a mean flow pore diameter of 3 to 10.5 μm in pore throat size distribution determined by a half dry/bubble point method.

FIG. 6

EP 2 352 194 A1

**Description**

[Technical Field]

This invention relates to membrane electrode assemblies for fuel cells, and specifically to an improvement in the cathode diffusion layer of a membrane electrode assembly for a fuel cell.

[Background Art]

An energy system using a fuel cell has been proposed as a means for solving the environmental problems such as global warming and air pollution and the problem of depletion of resources and realizing a sustainable recycling society

Examples of fuel cells include stationary fuel cells installed in factories and houses and non-stationary fuel cells used as the power source for automobiles, portable electronic appliances, etc. In recent years, it is desired to put fuel cells into practical use as early as possible as the power source particularly for ubiquitous mobile devices, since fuel cells do not have to be charged from AC adapters and allow devices to be used continuously if only they get refueled.

Among fuel cells, direct oxidation fuel cells, which generate power by supplying an organic fuel such as methanol or dimethyl ether directly to the anode for oxidation without reforming it into hydrogen, are receiving attention and under active research and development. This is because organic fuels have high theoretical energy densities, are easy to store, and permit simplification of fuel cell systems.

Direct oxidation fuel cells have a unit cell comprising a membrane electrode assembly (hereinafter referred to as an MEA) sandwiched between separators. The MEA typically includes a solid polymer electrolyte membrane and an anode and a cathode disposed on both sides thereof. The anode and the cathode each include a catalyst layer and a diffusion layer. The direct oxidation fuel cell generates power by supplying a fuel and water to the anode and supplying an oxidant (e.g. oxygen gas) to the cathode.

For example, the electrode reactions of a direct methanol fuel cell (hereinafter referred to as a DMFC), which uses methanol as the fuel, are as follows.

$$\text{Anode: } CH_3OH + H_2O \rightarrow CO_2 + 6H^+ + 6e^-$$

$$\text{Cathode: } 3/2O_2 + 6H^+ + 6e^- \rightarrow 3H_2O$$

At the anode, methanol reacts with water to produce carbon dioxide, protons, and electrons. The protons produced at the anode pass through the electrolyte membrane and reach the cathode, and the electrons reaches the cathode via an external circuit. At the cathode, the protons, the electrons, and oxygen combine to form water.

Practical utilization of direct oxidation fuel cells such as DMFCs has some problems.

One of them relates to durability Water produced by the reaction and/or water having moved from the anode accumulates with the passage of power generation time inside the pores of the cathode catalyst layer, at the interface between the cathode catalyst layer and the cathode diffusion layer, and inside the pores of the cathode diffusion layer. The water impairs the diffusion of the oxidant in the cathode, thereby causing the cathode concentration overvoltage to increase. This is the main reason of initial deterioration of power generation performance of direct oxidation fuel cells.

In particular, when the water continues to accumulate inside the pores of the cathode diffusion layer and at the interface between the cathode catalyst layer and the cathode diffusion layer, the water inside the pores cannot be removed therefrom, and the supply of the oxidant through the pores to the three-phase interface, which is the electrode reaction site, is impeded. As a result, it is difficult to maintain power generation.

Further, the initial deterioration is strongly affected by fuel crossover, which is a phenomenon of unreacted organic fuel passing through the electrolyte membrane and reaching the cathode. In particular, the phenomenon of unreacted methanol passing through the electrolyte membrane and reaching the cathode is called methanol crossover (hereinafter referred to as MCO).

That is, in the cathode catalyst layer, the reduction reaction of oxygen, which is the normal electrode reaction of the cathode, and the oxidation reaction of organic fuel such as methanol occur simultaneously. Thus, particularly when a high concentration organic fuel is used, the amount of crossover of the organic fuel increases with the passage of power generation time, thereby causing the cathode activation overvoltage to increase significantly. In addition, carbon dioxide produced further impairs oxidant diffusion, thereby causing the power generation performance to deteriorate significantly.

An approach to avoid these problems is to supply a large amount of oxidant to the cathode, but this is not preferable because this requires an increase in the power for driving oxidant supply devices such as an air pump or blower and/or requires upsizing of the devices. In addition, if the amount of oxidant supplied is excessive, the electrolyte membrane and the polymer electrolyte in the cathode catalyst layer included in the unit cell become dry, and the proton conductivity lowers. In this case, the power generation performance also deteriorates significantly.

To solve these problems with conventional art, a large number of proposals have been made to improve the structure of the cathode diffusion layer itself.

For example, PTL 1 discloses a gas diffusion layer wherein the pore size distribution has a peak of size of pores serving as water removal paths and a peak of size of pores serving as gas diffusion paths. PTL 1 intends to provide a gas diffusion layer capable of preventing flooding (water clogging) phenomenon and providing sufficient gas diffusion.

PTL 2 discloses a gas diffusion layer provided with through holes, wherein the through holes are in the shape of a pyramid, the inner wall of each through hole is inclined at a predetermined angle with respect to the axis of the through hole, and the cross sectional area of the through hole is increased from the catalyst layer side toward the separator side. The invention of PTL 2 intends to efficiently remove product water and facilitate the supply of gas to the catalyst.

PTL 3 discloses a gas diffusion layer containing a water-absorbent resin material so that the size of the pores in the gas diffusion layer changes according to the state of hydration. PTL 3 intends to provide a fuel cell capable of suppressing the occurrence of flooding (water clogging) phenomenon and drying (overdrying) phenomenon and improving the removal of product water.

[Citation List]

[Patent Literatures]

PTL 1: Japanese Laid-Open Patent Publication No. 2007-87651
PTL 2: Japanese Laid-Open Patent Publication No. 2008-108507
PTL 3: Japanese Laid-Open Patent Publication No. 2008-147145

[Summary of Invention]

[Technical Problem]

However, according to the conventional techniques as described above, liquid water accumulated inside the pores of the cathode catalyst layer, at the interface between the cathode catalyst layer and the cathode diffusion layer, and inside the pores of the cathode diffusion layer cannot be efficiently removed. Hence, even with the use of the conventional techniques, it is difficult to provide a fuel cell being capable of providing sufficient oxidant diffusion for an extended period of time and having good durability.

In the case of the technique disclosed in PTL 1, the peak of size of the pores serving as the water removal paths in the diffusion layer and the peak of size of the pores serving as the gas diffusion paths are defined in the distribution of pores including "blind pores" determined by the mercury intrusion method. The peak of size of the pores serving as the water removal paths is set lower than the peak of size of the pores serving as the gas diffusion paths. It is thus difficult to say that an optimum pore structure having both the function of removing water as viscous flow and the function of allowing air as diffusion flow to pass through is formed.

In the case of the technique disclosed in PTL 2, the shape of the through holes is defined to improve the water removal capability of the diffusion layer, but pore size affecting air diffusion is not mentioned. Further, the through holes have a large cross sectional area. Thus, the electrolyte membrane and the polymer electrolyte in the cathode catalyst layer may become dry, thereby causing the proton conductivity to lower and resulting in a significant deterioration of power generation characteristics.

In the case of the technique disclosed in PTL 3, the water-absorbent resin material in the diffusion layer swells with a large amount of liquid water present in the cathode, or in the case of using a hydrophilic organic fuel such as methanol, the crossover organic fuel, which causes the void volume of the pores to decrease. As a result, the power generation characteristics deteriorate significantly.

The invention solves the above-noted problems with conventional art, and intends to provide a fuel cell capable of efficiently removing liquid water accumulated in the cathode, thereby providing sufficient oxidant diffusion for an extended period of time and good durability.

[Solution to Problem]

One aspect of the invention relates to a membrane electrode assembly for a fuel cell including an anode, a cathode, and an electrolyte membrane disposed between the anode and the cathode. The cathode includes a cathode catalyst layer and a cathode diffusion layer disposed on the cathode catalyst layer. The cathode diffusion layer includes a conductive porous substrate and a porous composite layer disposed on a surface of the conductive porous substrate. The porous composite layer includes conductive carbon particles and a water-repellent binding material. The cathode diffusion layer has a plurality of through pores having a largest pore diameter of 15 to 20.5 $\mu$m and a mean flow pore diameter of 3 to 10.5 $\mu$m in pore throat size distribution determined by a half dry/bubble point method.

Another aspect of the invention relates to a fuel cell including at least one unit cell which includes the above-mentioned membrane electrode assembly for a fuel cell, an anode-side separator in contact with the anode, and a cathode-side separator in contact with the cathode.

While the novel features of the invention are set forth particularly in the appended claims, the invention, both as to organization and content, will be better understood and appreciated, along with other objects and features thereof, from the following detailed description taken in conjunction with the drawings.

[Advantageous Effects of Invention]

The invention allows the cathode diffusion layer to have an optimum pore structure having both the function of removing liquid water as viscous flow and the function of allowing an oxidant gas as diffusion flow to pass through. Hence, condensed water accumulated inside the pores of the cathode catalyst layer, at the interface between the cathode catalyst layer and the cathode diffusion layer, and inside the pores of the cathode diffusion layer is efficiently removed, and sufficient oxidant gas diffusion can be obtained for an extended period of time. Therefore, the invention can provide a fuel cell with good durability.

[Brief Description of Drawings]

FIG. 1 is a schematic longitudinal sectional view of the structure of a fuel cell according to one embodiment of the invention;
FIG. 2 is an enlarged schematic view of a part of a cathode diffusion layer 19 included in the fuel cell of FIG. 1;
FIG. 3 is a schematic view of the through pores of the cathode diffusion layer 19;
FIG. 4 schematically shows the principle of measurement of pore throat size distribution with a perm porometer;
FIG. 5 is a graph showing the principle of measurement of pore throat size distribution with a perm porometer;
FIG. 6 is a graph showing the principle of measurement of pore throat size distribution with a perm porometer; and
FIG. 7 is a graph showing the pore throat size distribution measured with a perm porometer.

[Description of Embodiments]

A membrane electrode assembly for a fuel cell according to the invention includes an anode, a cathode, and an electrolyte membrane disposed between the anode and the cathode. The cathode includes a cathode catalyst layer and a cathode diffusion layer disposed on the cathode catalyst layer. The cathode diffusion layer includes a conductive porous substrate and a porous composite layer disposed on a surface of the conductive porous substrate. The porous composite layer includes conductive carbon particles and a water-repellent binding material. The cathode diffusion layer has a plurality of through pores having a largest pore diameter of 15 to 20.5 $\mu$m and a mean flow pore diameter of 3 to 10.5 $\mu$m in pore throat size distribution determined by a half dry/bubble point method.

The membrane electrode assembly for a fuel cell according to the invention and the fuel cell using the same are hereinafter described with reference to drawings.

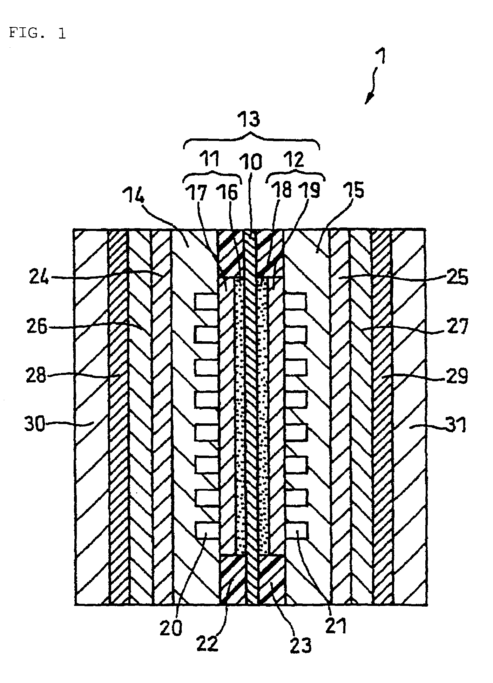

FIG 1 is a schematic longitudinal sectional view of the fuel cell according to one embodiment of the invention. A fuel cell 1 of FIG 1 includes a membrane electrode assembly (MEA) 13 comprising an electrolyte membrane 10 and an anode 11 and a cathode 12 sandwiching the electrolyte membrane 10, and an anode-side separator 14 and a cathode-side separator 15 sandwiching the MEA 13.

The anode 11 includes an anode catalyst layer 16 in contact with the electrolyte membrane 10 and an anode diffusion layer 17 facing the anode-side separator 14. The anode diffusion layer 17 includes a conductive porous substrate and a porous composite layer disposed on the conductive porous substrate. The conductive porous substrate is in contact with the anode-side separator 14, while the porous composite layer is in contact with the anode catalyst layer 16.

The cathode 12 includes a cathode catalyst layer 18 in contact with the electrolyte membrane 10 and a cathode diffusion layer 19 facing the cathode-side separator 15. The cathode diffusion layer 19 includes a conductive porous substrate and a porous composite layer disposed on the conductive porous substrate. The conductive porous substrate is in contact with the cathode-side separator 15, while the porous composite layer is in contact with the cathode catalyst layer 18.

The face of the anode-side separator 14 facing the anode 11 has a flow channel 20 for supplying a fuel and discharging an unused fuel and reaction products. The face of the cathode-side separator 15 facing the cathode 12 has a flow channel 21 for supplying an oxidant and discharging an unused oxidant and reaction products. The oxidant is, for example, oxygen gas or a mixed gas containing oxygen gas such as air. Air is usually used as the oxidant.

An anode-side gasket 22 is disposed around the anode 11 so as to seal the anode 11. Likewise, a cathode-side gasket 23 is disposed around the cathode 12 so as to seal the cathode 12. The anode-side gasket 22 faces the cathode-side gasket 23 with the electrolyte membrane 10 therebetween. The anode-side gasket 22 and the cathode-side gasket 23 prevent the fuel, oxidant, and reaction products from leaking to outside.

Further, the fuel cell 1 of FIG. 1 has, on both sides of the separators 14 and 15, current collector plates 24 and 25, sheet heaters 26 and 27, insulator plates 28 and 29, and end plates 30 and 31. The fuel cell 1 is integrally held by clamping means (not shown).

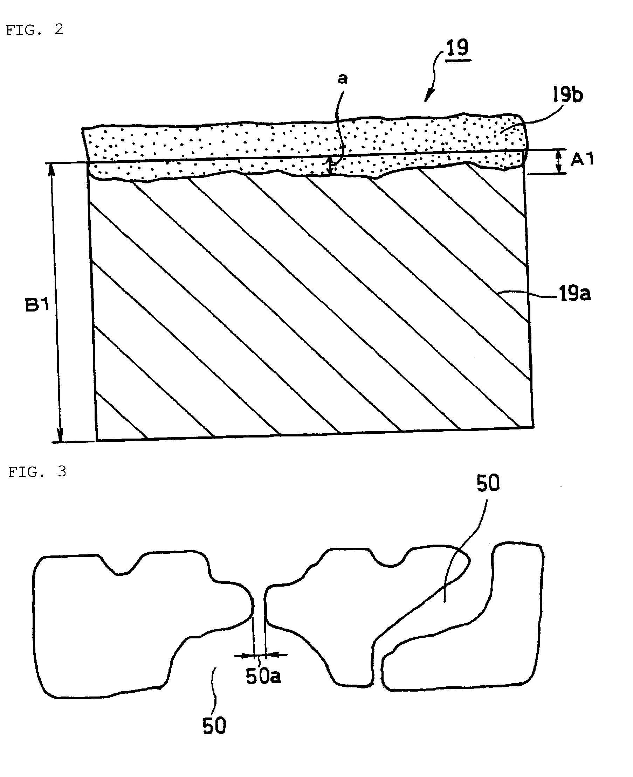

FIG. 2 is an enlarged schematic view of a part of the cathode diffusion layer 19 included in the fuel cell of FIG. 1. As illustrated in FIG. 2, the cathode diffusion layer 19 includes a conductive porous substrate 19a and a porous composite layer 19b disposed on the conductive porous substrate 19a. The porous composite layer 19b includes conductive carbon particles and a water-repellent binding material. In the cathode diffusion layer 19 illustrated in FIG. 2, the porous composite layer 19b is disposed on an entire main surface of the conductive porous substrate 19a. Preferably, the porous composite layer 19b covers one surface of the conductive porous substrate 19a evenly.

The conductive porous substrate 19a can be, for example, a conductive porous material which allows an oxidant to be diffused and allows water produced by power generation and water having moved from the anode to be removed while having electronic conductivity Specific examples of such conductive porous materials include carbon paper, carbon cloth, and carbon non-woven fabric.

The thickness of the conductive porous substrate is, for example, 100 to 500 $\mu$m, preferably 150 to 300 $\mu$m, and more preferably 150 to 250 $\mu$m.

The conductive porous material may be subjected to a water-repellent treatment. As used herein, the water-repellent treatment refers to attaching a water-repellent material to a conductive porous material. The water-repellent treatment can be performed in any stage in the production process of the cathode diffusion layer. Specifically, the water-repellent treatment can be performed by coating or impregnating a conductive porous material with a solution or dispersion of a water-repellent material, drying it, and baking it (high temperature baking).

Specific examples of water-repellent materials include fluorocarbon resins such as polytetrafluoroethylene (PTFE), tetrafluoroethylene-hexafluoropropylene copolymer (FEP), polyvinyl fluoride (PVF), polyvinylidene fluoride (PVDF), and tetrafluoroethylene-perfluoro(alkyl vinyl ether) copolymer (PFA). These water-repellent materials can be used singly or in combination.

The content of the water-repellent material is, for example, 5 to 40% by weight of the whole conductive porous substrate, preferably 10 to 30% by weight, and more preferably 15 to 25% by weight.

The porous composite layer 19b includes conductive carbon particles and a water-repellent binding material. Examples of conductive carbon particles include carbon blacks (acetylene black, ketjen black, channel black, furnace black, lamp black, and thermal black), and graphites. These conductive carbon particles can be used singly or in combination. The conductive carbon particles are preferably composed mainly of carbon black. Carbon black preferably has a highly developed structure and a specific surface area of approximately 200 to 300 $m^2$/g.

The water-repellent binding material can be, for example, a fluorocarbon resin. Specific examples of fluorocarbon resins include polytetrafluoroethylene (PTFE), tetrafluoroethylene-hexafluoropropylene copolymer (FEP), polyvinyl fluoride (PVF), polyvinylidene fluoride (PVDF), and tetrafluoroethylene-perfluoro(alkyl vinyl ether) copolymer (PFA). They can be used singly or in combination. Among fluorocarbon resins, polytetrafluoroethylene is preferable. Since polytetrafluoroethylene has a large number of chemically stable C-F bonds, even the use of a small amount makes the pore surface of the porous composite layer 19b resist interaction with water molecules, i.e., makes the pore surface water-repellent.

The amount of the porous composite layer 19b disposed on the conductive porous substrate 19a per projected unit area is, for example, 0.8 to 2.7 mg/cm$^2$, preferably 1 to 2.5 mg/cm$^2$, more preferably 1.2 to 2.2 mg/cm$^2$, and particularly 1.5 to 2 mg/cm$^2$. By setting the amount of the porous composite layer 19b in these ranges, it is possible to provide the porous composite layer 19b included in the cathode 12 with the basic functions of: (1) preventing the cathode catalyst layer from becoming dry; (2) reducing the contact resistance at the interface between the cathode catalyst layer and the conductive porous substrate; and (3) preventing the conductive porous substrate from penetrating through the catalyst layer and the electrolyte membrane to cause an internal short-circuit, plus an additional function (4) of forming selective water removal paths to control water removal.

If the amount of the porous composite layer 19b is too small, it is difficult for the porous composite layer 19b to evenly cover the surface of the conductive porous substrate 19a, and the above-mentioned functions of the porous composite layer 19b may not be fully exhibited. If the amount of the porous composite layer 19b is excessive, the porous composite layer 19b tends to become cracked. In this case, also, the above-mentioned functions of the porous composite layer 19b may not be fully exhibited.

As used herein, the amount of the porous composite layer 19b disposed on the conductive porous substrate 19a per projected unit area refers to the value obtained by dividing the total weight of the porous composite layer 19b by the area of the porous composite layer 19b calculated by using the outer shape thereof viewed from the direction normal to the main surface of the porous composite layer 19b. For example, when the outer shape of the porous composite layer 19b viewed from the direction normal thereto is rectangular, the area of the porous composite layer 19b can be calculated as (length) x (width), and the amount of the porous composite layer 19b per projected unit area can be obtained by dividing the total weight of the porous composite layer 19a by the above-mentioned area.

The content of the water-repellent binding material in the porous composite layer 19b is preferably 5 to 65% by weight, more preferably 20 to 50% by weight, or 35 to 45% by weight. When the content of the water-repellent binding material is set in these ranges, the porous composite layer 19b can provide sufficient electronic conductivity while providing sufficient water-repellency inside the pores.

If the content of the water-repellent binding material is too small, the porous composite layer 19b has poor water repellency inside the pores, so liquid water tends to accumulate inside the pores. This may result in poor permeation of oxidant gas in the porous composite layer 19b. If the content of the water-repellent binding material is excessive, it is difficult for the porous composite layer to provide sufficient electronic conductivity.

The cathode diffusion layer 19 has a plurality of through pores 50 as illustrated in FIG. 3, and each through pore 50 has a pore throat 50a where the pore becomes constricted and smallest in diameter. The diameter of the pore throat 50a strongly affects the permeation of water and oxidant gas. The distribution of the diameters of the pore throats 50a can be obtained as pore throat size distribution measured with a perm porometer according to the half dry/bubble point method (ASTM E1294-89 and F316-86). As used herein, pore throat size refers to the diameter of a circle having the same area as the smallest section of a through pore (section of a pore throat).

The cathode diffusion layer 19 has the through pores 50 with a largest pore diameter of 15 to 20.5 $\mu$m and a mean flow pore diameter of 3 to 10.5 $\mu$m in pore throat size distribution. It is thought that a liquid such as water behaves as a viscous flow and selectively passes through through pores having the largest pore diameter or diameters close thereto, while a gas such as oxidant gas behaves as a diffusion flow and passes through other through pores than the above-mentioned ones. The largest pore diameter affects water removal capability Also, the mean flow pore diameter affects the diffusion of oxidant gas and the supply of oxidant gas from the cathode diffusion layer to the cathode catalyst layer to form a three-phase interface serving as the electrode reaction site.

In the pore throat size distribution, the largest pore diameter is preferably 15 to 20 $\mu$m, more preferably 16.5 to 20 $\mu$m, and particularly 16.5 to 19.5 $\mu$m. If the largest pore diameter is less than 15 $\mu$m in the pore throat size distribution, the water removal function of the cathode diffusion layer lowers. Also, if the largest pore diameter exceeds 20.5 $\mu$m, the water removal function improves, but the polymer electrolyte in the cathode catalyst layer tends to become dry, thereby resulting in poor proton conductivity of the cathode catalyst layer.

Also, in the pore throat size distribution, the mean flow pore diameter is preferably 3 to 10 $\mu$m, more preferably 4 to 10 $\mu$m, and particularly 4.5 to 8 $\mu$m. If the mean flow pore diameter is less than 3 $\mu$m in the pore throat size distribution, it is difficult to supply oxidant to the cathode catalyst layer uniformly. Also, if the mean flow pore diameter exceeds 10.5 $\mu$m, the polymer electrolyte contained in the oxidant inlet-side portion of the cathode catalyst layer tends to become dry thereby resulting in poor proton conductivity

In the membrane electrode assembly for a fuel cell according to this embodiment, the pore size distribution of the through pores of the cathode diffusion layer is optimized rather than the pore size distribution including "blind pores". Due to the optimization, the cathode diffusion layer has through pores with pore diameters suitable for removing water as viscous flow and through pores with pore diameters suitable for diffusing an oxidant gas as diffusion flow. This structure can suppress a decrease in oxidant diffusion in the cathode diffusion layer caused by liquid water accumulated inside the pores of the cathode diffusion layer, at the interface between the cathode catalyst layer and the cathode diffusion layer, and inside the cathode diffusion layer. As a result, it is possible to provide a fuel cell with a small cathode overvoltage and good durability

Largest pore diameter and mean flow pore diameter can be measured by using an automated pore size distribution measurement system for porous materials (hereinafter referred to as a "perm porometer"). The method for measuring largest pore diameter and mean flow pore diameter is described below.

(i) Largest pore diameter

In the invention, largest pore diameter can be measured as follows.
First, the cathode diffusion layer is punched out into a predetermined size to obtain a measurement sample. The measurement sample is immersed in Galwick reagent with a small surface tension in a reduced pressure environment to impregnate the measurement sample with the Galwick reagent for 20 minutes so that the through pores of the measurement sample are filled with the Galwick reagent.

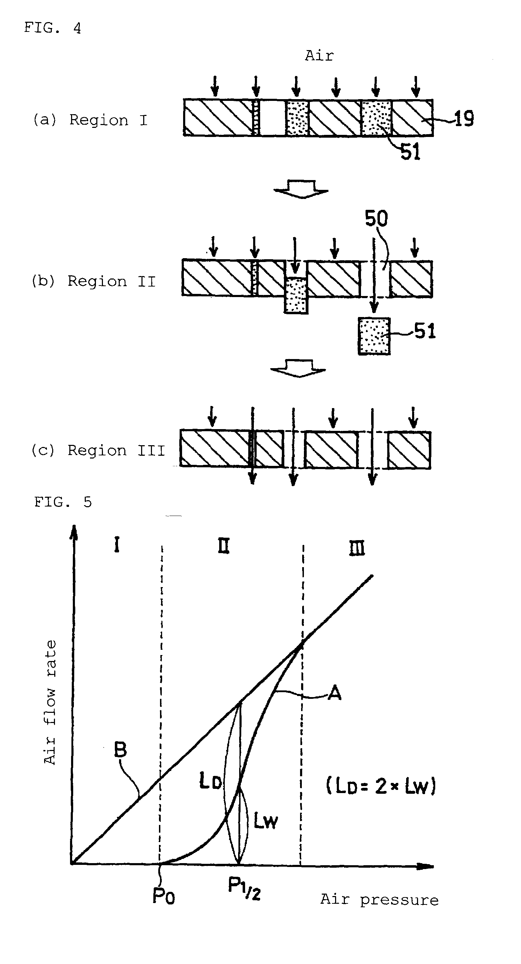

The measurement sample impregnated with the Galwick reagent is then mounted in a perm porometer. Air is supplied to the measurement sample and the air pressure is increased continuously. At this time, the pressure (bubble point pressure) P ($=P_0$) at which the air flow rate through the measurement sample starts increasing from zero, shown in FIG 5, is measured. Using the measured P value, the largest pore diameter D ($=Do$) of through pores of the cathode diffusion layer can be calculated from the following formula (1):

$$D = (C \times \gamma)/P \qquad (1)$$

In the formula (1), $\gamma$ represents the surface tension of the Galwick reagent, and C represents the constant of proportionality (2.86).

(ii) Mean flow pore diameter

Mean flow pore diameter can be measured as follows.
In the same manner as described above, first, the cathode diffusion layer is punched out into a predetermined size to obtain a measurement sample. The measurement sample is immersed in Galwick reagent with a small surface tension in a reduced pressure environment to impregnate the measurement sample with the Galwick reagent for 20 minutes so that the through pores of the measurement sample are filled with the Galwick reagent.

The measurement sample impregnated with the Galwick reagent is then mounted in a perm porometer, and air is supplied to the measurement sample. As illustrated in FIG 4 (a), Galwick reagent 51 is not pushed out of the through pores 50 before the air pressure P reaches $P_0$ (region I). As illustrated in FIG 4 (b), when the air pressure P reaches $P_0$ or more, the Galwick reagent 51 is pushed out of the through pores 50, so that the air flow rate therethrough increases. At this time, the Galwick reagent is pushed out sequentially, first from the through pore with the largest pore diameter, then from the through pores with decreasing pore diameters (region II). As illustrated in FIG. 4 (c), when the air pressure is further increased, the Galwick reagent 51 is pushed out of all the through pores 50 (region III). In the regions I to III, the air pressure is continuously increased and the air flow rates therethrough are measured to obtain a wet flow rate curve A shown in FIG. 5. In this measurement, the air supply pressure is increased until the air flow rate therethrough reaches 200 L/min. In FIG. 5, $P_{1/2}$ is the pressure at which the air flow rate Lw of the wet flow rate curve A is 1/2 of the air flow rate Ld of the dry flow rate line B.

Next, using the same measurement sample as it is, the air flow rate therethrough is measured while the air pressure is continuously increased. In this case, the air pressure is also increased until the air flow rate therethrough reaches 200 L/min. In this manner, a dry flow rate line B shown in FIG. 5 is obtained.

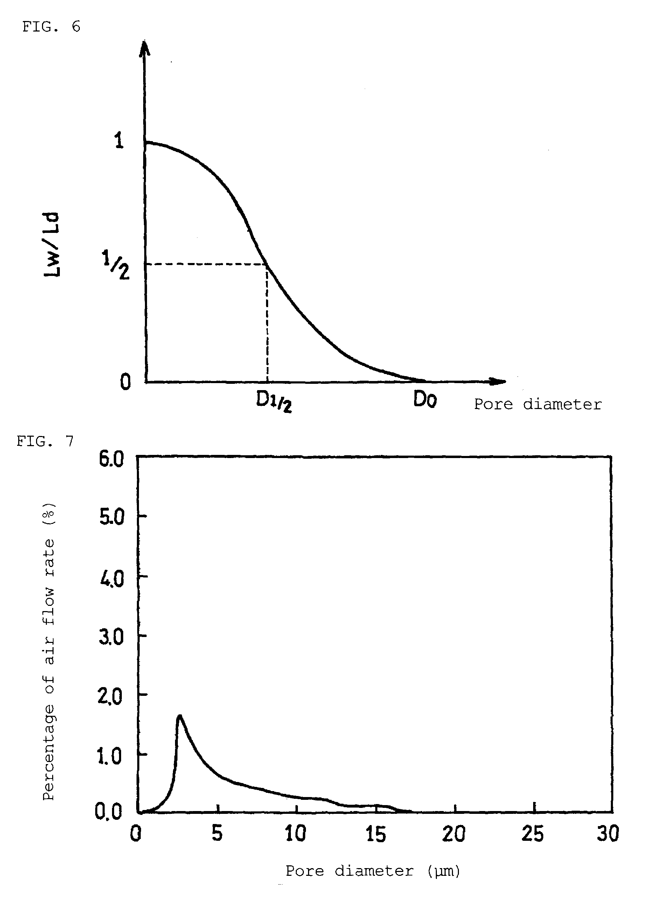

Using the wet flow rate curve A shown in FIG. 5, the air pressure P is converted to the pore diameter D according to the formula (1), and Lw/Ld is plotted against the pore diameter D to obtain a graph shown in FIG. 6. Lw/Ld is the integrated value of the ratio of the wet flow rate to the dry flow rate for predetermined pore diameter D. In the graph shown in FIG. 6, the pore size at an Lw/Ld of 1/2 is the mean flow pore diameter $D_{1/2}$ in pore throat size distribution. The pore size at an Lw/Ld of 0 is the largest pore diameter Do in pore throat size distribution. The mean flow pore diameter $D_{1/2}$ determined in this manner means that the air flow rate through the through pores with diameters of $D_{1/2}$ or more accounts for 1/2 of the total air flow rate through the cathode diffusion layer. Conversion of the graph of FIG. 6 showing the integrated values to a graph showing the contributions by pore diameters can yield, for example, a graph shown in FIG. 7.

Both when a liquid flows through a through pore and when a gas flows therethrough, the flow rate therethrough is affected by the narrowest part of the through pore. Therefore, the largest pore diameter and the mean flow pore diameter determined by the above-described measurement methods reflect the diameters of the narrowest parts of through pores.

Also, as illustrated in FIG. 2, the porous composite layer 19b is embedded in the conductive porous substrate 19a, and the depth A1 of the part of the porous composite layer 19b embedded in the conductive porous substrate 19a is 7% or less (e.g., 0.1 to 5%) of the thickness B1 of the conductive porous substrate 19a, preferably 3% or less (e.g., 0.5 to 3%), and more preferably 1 to 2.5%.
As the depth of the part of the porous composite layer 19b embedded in the conductive porous substrate 19a increases, the diffusion of oxidant gas in the plane direction of the conductive porous substrate 19a may decrease. In this case, the oxidant gas may not be uniformly supplied to the whole area of the cathode catalyst layer.
However, by setting the depth A1 of the part of the porous composite layer 19b embedded in the conductive porous substrate 19a in the above ranges of the thickness B1 of the conductive porous substrate 19a, it is possible to avoid a decrease in the diffusion of oxidant gas in the plane direction of the conductive porous substrate 19a.

The depth A1 of the part of the porous composite layer 19b embedded in the conductive porous substrate 19a can be measured, for example, as follows. The cathode diffusion layer 19 is cut to obtain a test sample. The test sample is embedded in an epoxy resin, and the surface of the test sample exposed from the epoxy resin is subjected to a dry polishing with sand paper and a mirror finish with buffing cloth (impregnated with alumina suspension). The section consisting of "the porous composite layer and the conductive porous substrate" was observed at predetermined 10 locations with an electron microscope, and the vertical distance "a" from the end of the conductive porous substrate 19a on the porous composite layer 19b side to the end of the porous composite layer 19b embedded in the conductive porous substrate 19a is measured. The depth A1 of the embedded part can be obtained by averaging the vertical distances "a" measured at the 10 locations.

Also, the thickness B1 of the conductive porous substrate 19a can be determined by observing predetermined 10 locations of a section thereof with an electron microscope and averaging the obtained values.

The pressure required for water to pass through the cathode diffusion layer (water displacement pressure) is, for example, 5 to 17 kPa, preferably 6.5 to 16 kPa, more preferably 7 to 12 kPa, or 10 to 15 kPa.

By using a cathode diffusion layer with such water displacement pressure, liquid water accumulated at the interface between the cathode catalyst layer and the cathode diffusion layer can be effectively removed to outside through the cathode diffusion layer. Further, since the liquid water is mainly removed from through pores with large diameters, it is possible to provide the cathode diffusion layer with sufficient oxidant gas supply paths.

If the water displacement pressure is too small, the cathode diffusion layer has poor water-repellency (hydrophobicity) inside the pores, so liquid water may accumulate inside the through pores. In this case, the permeability of oxidant gas in the cathode diffusion layer may lower. If the water displacement pressure is excessive, the function of the cathode diffusion layer to remove liquid water may decrease.

Water displacement pressure can be determined as follows. Specifically, the cathode diffusion layer is punched into a predetermined size to obtain a measurement sample. The measurement sample is mounted in a perm porometer. Thereafter, a water film (the weight of water per unit area: $0.35 \text{ g/cm}^2$) is formed on the upper entire surface of the measurement sample. Air is supplied to the water layer while the pressure of the air is continuously increased, and the pressure at which the air flow rate through the measurement sample starts increasing from zero, i.e., the critical pressure at which the water flows into and through the pores of the cathode diffusion layer, is measured. In the invention, this pressure is determined as the water displacement pressure.

The largest pore diameter and the mean flow pore diameter of the cathode diffusion layer 19 can be controlled by changing, for example, the state of the porous composite layer 19b covering the surface of the conductive porous substrate 19a, the amount of the porous composite layer 19b disposed on the surface of the conductive porous substrate 19a, and the content of the water-repellent binding material in the porous composite layer 19b. The state of covering can be controlled by adjusting, for example, the amount of the porous composite layer 19b disposed on the surface of the conductive porous substrate 19a and the depth of the embedded part thereof suitably.

It should be noted that when the porous composite layer 19b becomes cracked, the largest pore diameter and the mean flow pore diameter increase. The size of cracks in the porous composite layer 19b can be controlled by adjusting the amount of the porous composite layer 19b disposed on the conductive porous substrate 19a.

Further, when the dispersion medium has a large water content, the porous composite layer 19b contains bubbles. That is, the porosity of the porous composite layer 19b becomes high. Hence, the largest pore diameter and the mean flow pore diameter can also be controlled by changing the water content of the dispersion medium contained in the paste used to form the porous composite layer 19b.

Water displacement pressure can be controlled by adjusting, for example, the amount of the water-repellent binding material contained in the porous composite layer 19b and the depth of the part of the porous composite layer 19b embedded in the conductive porous substrate 19a. The depth of the part of the porous composite layer 19b embedded in the conductive porous substrate 19a can be controlled by adjusting, for example, the amount of the water-repellent material contained in the conductive porous substrate 19a.

The cathode diffusion layer can be produced by conventional methods. For example, the cathode diffusion layer can be produced by applying a dispersion containing conductive carbon particles and a water-repellent binding material onto a surface of a conductive porous substrate, drying the resulting coating film, and baking it (high temperature baking) to form a porous composite layer. The baking temperature is, for example, 350 to 400°C, preferably 360 to 380°C.

Examples of the dispersion medium for dispersing the conductive carbon particles and the water-repellent binding material include water and $C_{1-6}$ alkanols such as ethanol, isopropanol, sec-butanol, and tert-butanol. These dispersion media can be used singly or in combination. The dispersion medium preferably includes water, and a solvent mixture of water and a water-soluble alkanol (particularly $C_{3-4}$ branched alkanol or the like) is preferable.

In the dispersion containing the conductive carbon particles and the water-repellent binding material, the water content can be, for example, 20 to 60% by weight, preferably 25 to 55% by weight, and more preferably 30 to 50% by weight. If the water content is excessive, the porous composite layer contains bubbles and the porosity becomes unnecessarily high, as mentioned above. Thus, the largest pore diameter and the mean flow pore diameter of the through pores formed in the cathode diffusion layer may become too large. Also, if the water content is too low, the dispersion stability of the conductive carbon particles in the dispersion decreases, and the application may become uneven or streaky. Alternatively, the largest pore diameter and the mean flow pore diameter of the through pores formed in the cathode diffusion layer may become small, and water removal and air diffusion may be impaired.

In the invention, the other constituent components than the cathode diffusion layer 19 are not particularly limited. Referring to FIG. 1, the other constituent components than the cathode diffusion layer 19 are hereinafter described.

The electrolyte membrane 10 preferably has good proton conductivity heat resistance, chemical stability resistance to swelling with methanol, etc. The material constituting the electrolyte membrane 10 (polymer electrolyte) is not particularly limited if the electrolyte membrane 10 has these characteristics.

The electrolyte membrane 10 includes an ion-exchange resin usually used in the field of fuel cells (e.g., a cation-exchange resin having a strong acid group such as sulfonic acid group, phosphonic acid group, or phosphoric acid group). Examples of ion-exchange resins include resins having a perfluoroalkyl group with a sulfonic acid group, sulfonated polyether ketone resins (e.g., sulfonated polyether ketone and sulfonated polyether ether ketone), and sulfonated polyimides. The electrolyte membrane 10 may be a porous membrane made of an ion-exchange resin or may be a porous membrane comprising a porous substrate (e.g., a porous polymer substrate) coated or impregnated with an ion-exchange resin.

The anode catalyst layer 16 is composed mainly of: conductive carbon particles with catalyst metal fine particles supported thereon or catalyst metal fine particles; and a polymer electrolyte. The catalyst metal fine particles can be, for example, platinum (Pt)-ruthenium (Ru) alloy fine particles. The amount of the catalyst metal fine particles contained in the anode catalyst layer 16 per projected unit area is preferably 3 to 7 mg/cm$^2$.

The cathode catalyst layer 18 is composed mainly of: conductive carbon particles with catalyst metal fine particles supported thereon; and a polymer electrolyte. The catalyst metal fine particles can be, for example, platinum (Pt) fine particles. The amount of the catalyst metal fine particles contained in the cathode catalyst layer 18 per projected unit area is preferably 1 to 2 mg/cm$^2$.

As used herein, the amount of the catalyst metal fine particles contained in each catalyst layer per projected unit area refers to the value obtained by dividing the weight of the catalyst metal fine particles contained in each catalyst layer by the area of the catalyst layer calculated by using the outer shape thereof viewed from the direction normal to the main surface of the catalyst layer. For example, when the outer shape of the catalyst layer viewed from the direction normal thereto is rectangular, the area of the catalyst layer can be calculated as (length) x (width), and the amount of the catalyst metal fine particles per projected unit area can be obtained by dividing the weight of the catalyst fine particles contained in the catalyst layer by the above-mentioned area.

The polymer electrolyte contained in the anode catalyst layer 16 and the cathode catalyst layer 18 preferably has good proton conductivity, heat resistance, chemical stability, resistance to swelling with methanol, etc. Examples of the polymer electrolyte which can be used include polymer electrolytes mentioned as the materials of the electrolyte membrane 10. The polymer electrolyte contained in the anode catalyst layer 16 and the cathode catalyst layer 18 may be the same as the material of the electrolyte membrane 10 or may be different therefrom.

In the same manner as the cathode diffusion layer 19, the anode diffusion layer 17 includes a conductive porous substrate and a porous composite layer disposed on the conductive porous substrate. The porous composite layer contains conductive carbon particles and a water-repellent binding material. In the anode diffusion layer 17, the amount of the porous composite layer disposed on the surface of the conductive porous substrate is preferably 2 to 3 mg/cm$^2$. This amount is the amount of the porous composite layer per projected unit area (1 cm$^2$).

The conductive porous substrate for the anode diffusion layer is preferably a conductive porous material which allows fuel to be diffused and allows carbon dioxide produced by power generation to be removed while having electronic conductivity Examples of such materials include carbon paper, carbon cloth, and carbon non-woven fabric. The thickness of the conductive porous material is, for example, 150 to 400 $\mu$m.

Further, the conductive porous material for the anode diffusion layer may be subjected to a water-repellent treatment. As used herein, the water-repellent treatment refers to attaching a water-repellent material to a conductive porous material. Specifically, the water-repellent treatment can be performed by coating or impregnating a conductive porous material with a solution or dispersion of a water-repellent material, drying it, and baking it (high temperature baking). The baking temperature is, for example, 350 to 400°C, and preferably 360 to 380°C. Examples of water-repellent materials include fluorocarbon resins such as polytetrafluoroethylene (PTFE), tetrafluoroethylene-hexafluoropropylene copolymer (FEP), polyvinyl fluoride (PVF), polyvinylidene fluoride (PVDF), and tetrafluoroethylene-perfluoro(alkyl vinyl ether) copolymer (PFA). These water-repellent materials can be used singly or in combination. The content of the water-repellent material is not particularly limited, and can be, for example, approximately 1 to 50% by weight.

Examples of the conductive carbon particles contained in the porous composite layer for the anode diffusion layer include carbon black and graphite as mentioned above. These conductive carbon particles can be used singly or in combination. The conductive carbon particles are preferably composed mainly of carbon black. Carbon black preferably has a highly developed structure and a specific surface area of approximately 200 to 300 m²/g.

The water-repellent binding material contained in the porous composite layer for the anode diffusion layer can be such a fluorocarbon resin as described above.

The material of the separators 14 and 15 is not particularly limited if it has gas tightness, electronic conductivity and electrochemical stability Also, the shape of the flow channels 20 and 21 is not particularly limited.

The current collector plates 24 and 25, the sheet heaters 26 and 27, the insulator plates 28 and 29, and the end plates 30 and 31 can be formed of materials known in the art.

[Examples]

The invention is hereinafter described in details based on Examples, but these Examples are not to be construed as limiting in any way the invention.

(Example 1)

A fuel cell as illustrated in FIGs. 1 and 2 was produced.

(Preparation of anode catalyst layer)

Pt-Ru alloy fine particles with a mean particle size of 3 nm (Pt:Ru weight ratio = 2:1) were used as the anode catalyst.

The anode catalyst was ultrasonically dispersed in an aqueous solution of isopropanol. To the resulting dispersion was added an aqueous solution containing 5% by weight of a polymer electrolyte. The resulting mixture was stirred with a disperser to prepare an anode catalyst ink. The weight ratio of the Pt-Ru alloy fine particles to the polymer electrolyte in the anode catalyst ink was set to 3:1. The polymer electrolyte used was a perfluorocarbon sulfonic acid ionomer (Flemion available from Asahi Glass Co., Ltd.).

Subsequently, the anode catalyst ink was applied onto a predetermined region of a surface of an electrolyte membrane 10 by using a spray coater and then dried to form an anode catalyst layer 16 with a size of 6 cm x 6 cm. The amount of the Pt-Ru catalyst contained in the anode catalyst layer 16 was 6.25 mg/cm². This amount of the Pt-Ru catalyst is the weight of the Pt-Ru catalyst contained per unit area of the catalyst layer. The electrolyte membrane 10 used was a hydrocarbon electrolyte membrane (available from PolyFuel Inc., membrane thickness 62 μm) cut to a size of 15 cm × 10 cm.

(Preparation of cathode catalyst layer)

Conductive carbon particles of 30 nm in mean primary particle size with Pt of 3 nm in mean particle size supported thereon were used as the cathode catalyst. Carbon black (ketjen black EC available from Mitsubishi Chemical Corporation) was used as the conductive carbon particles, and the ratio of the weight of the Pt catalyst to the total weight of the conductive carbon particles and the Pt catalyst was set to 46% by weight.

The cathode catalyst was ultrasonically dispersed in an aqueous solution of isopropanol. To the resulting dispersion was added an aqueous solution containing 5% by weight of a polymer electrolyte. The resulting mixture was stirred with a disperser to prepare a cathode catalyst ink. The ratio of the weight of the polymer electrolyte to the weight of the conductive carbon particles in the cathode catalyst ink was set to 0.44. The polymer electrolyte used was a perfluorocarbon sulfonic acid ionomer (Flemion available from Asahi Glass Co., Ltd.).

Thereafter, using a spray coater, the cathode catalyst ink was applied onto a predetermined region of the surface of the electrolyte membrane 10 opposite to the surface with the anode catalyst layer 16 so as to face the anode catalyst layer 16, and then dried to form a cathode catalyst layer 18 with a size of 6 cm x 6 cm. In this manner, a catalyst coated membrane (CCM) was prepared. The amount of the Pt catalyst contained in the cathode catalyst layer 18 was 1.35 mg/cm².

(Preparation of anode diffusion layer)

An anode diffusion layer 17 was produced by forming a porous composite layer on a surface of a conductive porous substrate.

A conductive porous substrate was prepared as follows. Carbon paper (TGP-H-090 available from Toray Industries Inc.) was used as a conductive porous material. The carbon paper was immersed in a 7 wt% polytetrafluoroethylene (PTFE) dispersion (an aqueous solution prepared by diluting D-1 E of Daikin Industries, Ltd. with ion-exchange water) for 1 minute, and then dried at room temperature in the air for 3 hours. Thereafter, the dried carbon paper was heated at 360°C in an inert gas (N$_2$) for 1 hour to remove the surfactant. In this manner, a conductive porous substrate (thickness 300 $\mu$m) was prepared. The amount of PTFE in the conductive porous substrate was 12.5% by weight of the conductive porous substrate.

Thereafter, a porous composite layer was formed on a surface of the conductive porous substrate as follows. First, conductive carbon black (VulcanXC-72R available from CABOT Corporation) was ultrasonically dispersed in an aqueous solution containing a surfactant (Triton X-100 available from Aldrich Corporation). To the resulting dispersion was added a PTFE dispersion (D-1 E available from Daikin Industries, Ltd.), and the resulting mixture was highly dispersed again to prepare a paste for forming an anode porous composite layer. This paste for forming an anode porous composite layer was uniformly applied onto the whole area of one face of the conductive porous substrate with a doctor blade, and dried at room temperature in the air for 8 hours. The conductive porous substrate was then baked at 360°C in an inert gas (N$_2$) for 1 hour to remove the surfactant, so that a porous composite layer was formed on the surface of the conductive porous substrate. In this manner, the anode diffusion layer 17 was produced.

In the anode diffusion layer 17, the content of PTFE in the porous composite layer was 40% by weight, and the amount of the porous composite layer per projected unit area of the conductive porous substrate was 2.6 mg/cm$^2$.

(Preparation of cathode diffusion layer)

A cathode diffusion layer 19 was produced by forming a porous composite layer 19b on a surface of a conductive porous substrate 19a.

The conductive porous substrate 19a was prepared as follows. Carbon paper (TGP-H-060 available from Toray Industries Inc.) was used as a conductive porous material. The carbon paper was immersed in a 15 wt% polytetrafluoroethylene (PTFE) dispersion (an aqueous solution prepared by diluting a 60% PTFE dispersion of Aldrich Corporation with ion-exchange water) for 1 minute, and then dried at room temperature in the air for 3 hours. Thereafter, the dried carbon paper was heated at 360°C in an inert gas (N$_2$) for 1 hour to remove the surfactant. In this manner, the conductive porous substrate (thickness 200 $\mu$m) was prepared. The amount of PTFE in the conductive porous substrate was 23.5% by weight of the conductive porous substrate.

Thereafter, the porous composite layer 19b was formed on a surface of the conductive porous substrate 1 9a as follows.

First, conductive carbon black (VulcanXC-72R available from CABOT Corporation) was introduced into an isopropanol aqueous solution containing a surfactant (Triton X-100 available from Aldrich Corporation), and the aqueous solution was ultrasonically dispersed while being stirred. To the resulting dispersion was added a 20 wt% PTFE dispersion (KD500AS available from KITAMURA LIMITED), and the resulting dispersion was stirred with a disperser for 3 hours to prepare a paste for forming a cathode porous composite layer (the water content in the dispersion medium was 40% by weight). This paste for forming a cathode porous composite layer was uniformly applied onto a surface of the conductive porous substrate with a doctor blade, and dried at room temperature in the air for 8 hours. The conductive porous substrate was then baked at 360°C in an inert gas (N$_2$) for 1 hour to remove the surfactant, so that the porous composite layer 19b was formed on the surface of the conductive porous substrate 19a. In this manner, the cathode diffusion layer 19 was produced.

In the cathode diffusion layer 19, the content of PTFE in the porous composite layer 19b was 40% by weight, and the amount of the porous composite layer 19b per projected unit area was 1.8 mg/cm$^2$.

(Production of MEA)

First, each of the anode diffusion layer 17 and the cathode diffusion layer 19 was cut to a size of 6 cm x 6 cm, and they were disposed on both sides of the catalyst coated membrane (CCM) so that their porous composite layers were in contact with the catalyst layers. The resulting assembly was then pressed at 130°C and 4 MPa for 3 minutes to bond the catalyst layers and the diffusion layers. In this manner, a membrane electrode assembly (MEA) 13 was produced.

Subsequently, an anode-side gasket 22 and a cathode-side gasket 23 were disposed around the anode 11 and cathode 12 of the MEA 13 so as to sandwich the electrolyte membrane 10. Each of the anode-side gasket 22 and the cathode-side gasket 23 was a three-layer structure consisting of a polyetherimide intermediate layer sandwiched between silicone rubber layers.

The MEA 13 fitted with the gaskets were sandwiched between an anode-side separator 14 and a cathode-side separator 15, current collector plates 24 and 25, sheet heaters 26 and 27, insulator plates 28 and 29, and end plates 30 and 31, each of which had outer dimensions of 12 cm $\times$ 12 cm, so as to form a structure illustrated in FIG. 1. This was secured by clamping rods. The clamping pressure was set to 12 kgf/cm$^2$ (approximately 1.2 MPa) per unit area of the separators.

The separators 14 and 15 were formed of a resin-impregnated graphite material of 4 mm in thickness (G347B available from TOKAI CARBON CO., LTD.). Each of the separators was provided with a serpentine flow channel having a width of 1.5 mm and a depth of 1 mm. The current collector plates 24 and 25 used were gold-plated stainless steel plates. The sheet heaters 26 and 27 were SEMICON heaters (available from SAKAGUCHI E.H. VOC CORP.).
A fuel cell produced in the above manner was named a fuel cell A.

(Example 2)

A fuel cell B was produced in the same manner as in Example 1, except that in the preparation of a cathode diffusion layer, the amount of the porous composite layer per projected unit area was set to 0.9 mg/cm$^2$. The amount of the porous composite layer was adjusted by decreasing the set gap of the doctor blade for applying the paste for forming the cathode porous composite layer onto a conductive porous substrate surface.

(Example 3)

A fuel cell C was produced in the same manner as in Example 1, except that in the preparation of a cathode diffusion layer, the amount of the porous composite layer per projected unit area was set to 2.6 mg/cm$^2$. The amount of the porous composite layer was adjusted by increasing the set gap of the doctor blade for applying the paste for forming the cathode porous composite layer onto a conductive porous substrate surface.

(Example 4)

A fuel cell D was produced in the same manner as in Example 1, except that in the preparation of a conductive porous substrate of a cathode diffusion layer, the amount of PTFE contained in the conductive porous substrate was set to 11.5% by weight of the conductive porous substrate. The amount of PTFE was adjusted by decreasing the solid content concentration of the polytetrafluoroethylene (PTFE) dispersion used to immerse a conductive porous material therein.

(Example 5)

A fuel cell E was produced in the same manner as in Example 1, except that in the preparation of a cathode diffusion layer, the content of the PTFE in the porous composite layer was set to 10% by weight. The content of PTFE was adjusted by decreasing the amount of the PTFE dispersion added to the paste for forming the cathode porous composite layer.

(Example 6)

A fuel cell F was produced in the same manner as in Example 1, except that in the preparation of a cathode diffusion layer, the content of the PTFE in the porous composite layer was set to 60% by weight. The content of PTFE was adjusted by increasing the amount of the PTFE dispersion added to the paste for forming the cathode porous composite layer.

(Comparative Example 1)

A comparative fuel cell 1 was produced in the same manner as in Example 1, except that the cathode diffusion layer was composed only of the conductive porous substrate, i.e., the conductive porous substrate surface had no porous composite layer.

(Comparative Example 2)

A comparative fuel cell 2 was produced in the same manner as in Example 1, except that in the preparation of a cathode diffusion layer, the amount of the porous composite layer per projected unit area was set to 0.6 mg/cm$^2$. The amount of the porous composite layer was adjusted by decreasing the set gap of the doctor blade for applying the paste for forming the cathode porous composite layer onto a conductive porous substrate surface.

(Comparative Example 3)

A comparative fuel cell 3 was produced in the same manner as in Example 1, except that in the preparation of a cathode diffusion layer, the amount of the porous composite layer per projected unit area was set to 3.5 mg/cm$^2$. The amount of the porous composite layer was adjusted by increasing the set gap of the doctor blade for applying the paste for forming the cathode porous composite layer onto a conductive porous substrate surface.

(Comparative Example 4)

A comparative fuel cell 4 was produced in the same manner as in Example 1, except that the water content of the dispersion medium in the paste for forming the cathode porous composite layer was set to 10% by weight.

[Evaluation]

Using an automated pore size distribution measurement system (perm porometer) of PMI for porous materials, the cathode diffusion layers used in the fuel cells produced in Examples 1 to 6 and Comparative Examples 1 to 4 were measured for largest through pore diameter, mean flow through pore diameter, and water displacement pressure in pore throat size distribution. The measurement method is described below.

(1) Largest through pore diameter

The cathode diffusion layer was punched out into a disc of 25 mm in diameter to obtain a measurement sample. The sample was immersed in Galwick reagent with a surface tension $\gamma$ of 15.7 mN/m in a reduced pressure environment to impregnate the sample with the Galwick reagent for 20 minutes. In this manner, the through pores of the sample were filled with the Galwick reagent.
Subsequently, the sample filled with the Galwick reagent was mounted in the perm porometer. The air pressure was continuously increased, and the pressure (bubble point pressure) $P_0$ at which the air flow rate through the sample started increasing from zero was measured. From the $P_0$ value, the largest pore diameter Do of the through pores was calculated according to the formula (1).

(2) Mean flow through pore diameter

In the same manner as described above, the cathode diffusion layer was punched out into a disc of 25 mm in diameter to obtain a measurement sample. The sample was immersed in Galwick reagent with a surface tension $\gamma$ of 15.7 mN/m in a reduced pressure environment to impregnate the sample with the Galwick reagent for 20 minutes. In this manner, the through pores of the sample were filled with the Galwick reagent.
Subsequently, the sample filled with the Galwick reagent was mounted in the perm porometer. When the air pressure is continuously increased, the filled Galwick reagent is pushed out from the through pores sequentially, first from the through pore with the largest pore diameter, then from the through pores with decreasing pore diameters, so that the air flow rate through the sample increases. In this measurement, the air pressure was increased until the air flow rate therethrough reached 200 L/min. In this manner, a wet flow rate curve was obtained.
Subsequently, using the same measurement sample as it is, the air flow rate therethrough was measured while the air pressure was continuously increased. In this case, the air pressure was also increased until the air flow rate therethrough reached 200 L/min. In this manner, a dry flow rate line was obtained.
Thereafter, the pressure $P_{1/2}$ at which the air flow rate Lw of the wet flow rate curve was 1/2 of the air flow rate Ld of the dry flow rate line was obtained. From the obtained $P_{1/2}$ value, the mean flow pore diameter $D_{1/2}$ of through pores of the cathode diffusion layer was calculated according to the formula (1).

(3) Water displacement pressure

Also, the cathode diffusion layer was punched into a disc of 25 mm in diameter to obtain a measurement sample. The sample was mounted in the perm porometer, and a water layer (the weight of water per unit area: 0.35 g/cm$^2$) was formed on the upper entire surface of the sample using a syringe. Air was supplied to the water layer while the pressure of the air was continuously increased, and the pressure at which the air flow rate through the sample started increasing from zero, i.e., the critical pressure at which the water flowed into and through the pores of the cathode diffusion layer, was measured. This pressure was determined as the water displacement pressure.
Table 1 shows the measurement results of largest pore diameter, mean flow pore diameter, and water displacement pressure of the through pores of each cathode diffusion layer in pore throat size distribution.
Also, using the cathode diffusion layers used in the fuel cells produced in Examples 1 to 6 and Comparative Examples 1 to 4, the depth of the part of the porous composite layer embedded in the conductive porous substrate was evaluated by the following method.

(4) Depth of embedded part of porous composite layer

The cathode diffusion layer was cut to a predetermined size to obtain a test sample. The test sample was embedded in an epoxy resin, and the surface of the test sample exposed from the epoxy resin was subjected to a dry polishing with sand paper and a mirror finish with buffing cloth (impregnated with alumina emulsion). The section consisting of "the porous composite layer and the conductive porous substrate" was observed at predetermined 10 locations with a scanning electron microscope (S4500 available from Hitachi, Ltd.), and the vertical distance "a" from the end of the conductive porous substrate 19a on the porous composite layer 19b side to the end of the porous composite layer 19b embedded in the conductive porous substrate 19a was measured. The vertical distances "a" measured at the 10 locations were averaged to obtain the depth A1 of the embedded part.
Also, the thickness B1 of the conductive porous substrate 19a was determined by observing predetermined 10 locations of a section thereof with an electron microscope and averaging the obtained values.

Table 1 shows the results. Table 1 also shows the amount of the porous composite layer per unit area, the weight ratio of the water-repellent binding material in the porous composite layer, and the water content in the paste used to form the porous composite layer of each cathode diffusion layer prepared in the respective Examples and Comparative Examples.

Next, using the fuel cells A to F produced in Examples 1 to 6 and the fuel cells 1 to 4 produced in Comparative Examples 1 to 4, their durability was evaluated. The evaluation method is described below.

A4M methanol aqueous solution was supplied to the anode as the fuel at a flow rate of 0.27 m L/min, while air was supplied to the cathode as the oxidant at a flow rate of 0.26 L/min. The respective fuel cells were operated at a constant voltage of 0.4 V to continuously generate power. The cell temperature during the power generation was set to 60 °C.
Power density value was calculated from the current density value upon the lapse of 4 hours from the start of power generation. The calculated value was determined as the initial power density Thereafter, power density value was calculated from the current density value upon the lapse of 5000 hours from the start of power generation.
The ratio of the power density upon the lapse of 5000 hours to the initial power density was determined as the power density retention rate. Table 1 shows the results. In Table 1, the power density retention rates are expressed as percentages.

[Table 1]

| | Cathode diffusion layer | | | | | | | | Durability | |
|---|---|---|---|---|---|---|---|---|---|---|
| | Largest pore diameter ($\mu$m) | Mean flow diameter ($\mu$m) | Water displacement pressure (kPa) | Porous composite layer | | | | Conductive porous substrate | Initial power density (mW/cm$^2$) | Power density retention rate (%) |
| | | | | Amount (mg/cm$^2$) | Depth of embedded part (%) | Amount of water-repellent binding material (wt%) | Water content in dispersion medium of paste (wt%) | Amount of water-repellent material (wt%) | | |
| Fuel cell A | 17 | 5 | 10 | 1.8 | 2 | 40 | 40 | 23.5 | 92 | 98 |
| Fuel cell B | 20 | 10 | 7 | 0.9 | 2 | 40 | 40 | 23.5 | 75 | 96 |
| Fuel cell C | 19 | 7 | 8 | 2.6 | 2 | 40 | 40 | 23.5 | 80 | 93 |
| Fuel cell D | 17 | 5 | 12 | 1.8 | 6 | 40 | 40 | 11.5 | 85 | 95 |
| Fuel cell E | 16 | 4 | 9 | 1.8 | 3 | 10 | 40 | 23.5 | 78 | 90 |
| Fuel cell F | 19 | 6 | 16 | 1.8 | 1 | 60 | 40 | 23.5 | 73 | 92 |
| Comp. fuel cell 1 | 25 | 13 | 7 | - | - | - | - | - | 68 | 54 |
| Comp-fuel cell 2 | 22 | 12 | 9 | 0.6 | 2 | 40 | 40 | 23.5 | 73 | 65 |
| Comp-fuel cell 3 | 21 | 11 | 9 | 3.5 | 3 | 40 | 40 | 23.5 | 75 | 73 |
| Comp-fuel cell 4 | 14 | 2 | 16 | 1.8 | 3 | 40 | 10 | 23.5 | 77 | 71 |

EP 2 352 194 A1

As is clear from Table 1, the power density retention rates of the fuels cell A to F were very high values. This is because the cathode diffusion layers of the fuel cells of Examples have an optimum pore structure with both the function of removing water as viscous flow and the function of allowing air as diffusion flow to pass through. Thus, liquid water accumulated inside the pores of the cathode catalyst layer, at the interface between the cathode catalyst layer and the cathode diffusion layer, and inside the pores of the cathode diffusion layer is efficiently removed, and sufficient air diffusion in the cathode can be obtained for an extended period of time. Probably for this reason, very good durability could be obtained.

Among the fuel cells A to F, the fuel cell A exhibits significant improvements in initial performance and durability In the case of the fuel cell A, the amount of the porous composite layer disposed on the conductive porous substrate surface, the depth of the part embedded in the conductive porous substrate, and the content of the water-repellent binding material are further optimized. This ensures the basic functions of: (1) preventing the cathode catalyst layer from becoming dry; (2) reducing the contact resistance at the interface between the cathode catalyst layer and the conductive porous substrate; and (3) preventing the conductive porous substrate from penetrating through the cathode catalyst layer and the electrolyte membrane to cause an internal short-circuit, plus an additional function (4) of forming selective water removal paths in the cathode diffusion layer to control water removal. Probably for this reason, the fuel cell A exhibited significant improvements in initial performance and durability.

On the other hand, the power density retention rates of the comparative fuel cells 1 to 4 were significantly low values, compared with the power density retention rates of the fuel cells A to F.

In the case of the comparative fuel cell 1, the surface of the conductive porous substrate of the cathode diffusion layer has no porous composite layer. The comparative fuel cell 2 has a porous composite layer, but the porous composite layer is uneven. Hence, in the comparative fuel cells 1 and 2, the largest pore diameter and mean flow pore diameter of the through pores in the cathode diffusion layer become large, and the polymer electrolyte in the cathode catalyst layer becomes dry. Probably for this reason, the proton conductivity of the cathode catalyst layer lowered, and the durability deteriorated significantly.

In the case of the comparative fuel cell 3, the porous composite layer developed a large number of cracks, so the largest pore diameter and mean flow pore diameter of the through pores in the cathode diffusion layer became large. Probably for this reason, the above-described functions of the cathode diffusion layer were not fully exhibited, and the durability deteriorated significantly.

In the case of the comparative fuel cell 4, the dispersion medium contained in the paste for forming the cathode porous composite layer used to form the cathode diffusion layer has a small water content. When such a paste is used, the largest pore diameter and mean flow pore diameter of the through pores formed in the cathode diffusion layer become small and both water removal and air diffusion are impaired, although the largest pore diameter and mean flow pore diameter of the through pores are also affected by other conditions. Probably for this reason, the durability deteriorated significantly.

In the above Examples, direct methanol fuel cells were produced, but the invention is applicable to fuel cells in which oxidant gas is supplied to the cathode to produce water. For example, the invention is also applicable to fuel cells in which hydrogen gas is supplied to the anode while oxidant gas such as air is supplied to the cathode.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

[Industrial Applicability]

The fuel cell of the invention with good power generation characteristics and durability is useful as the power source for portable small electronic devices such as, for example, cellular phones, notebook personal computers, and digital still cameras. Further, the fuel cell of the invention can also be used advantageously as the power source for electric scooters, automobiles, etc.

[Reference Signs List]

1        Fuel Cell
10        Electrolyte Membrane
11        Anode
12        Cathode

| 13 | Membrane Electrode Assembly (MEA) |
| 14 | Anode-Side Separator |
| 15 | Cathode-Side Separator |
| 16 | Anode Catalyst Layer |
| 17 | Anode Diffusion Layer |
| 18 | Cathode Catalyst Layer |
| 19 | Cathode Diffusion Layer |
| 19a | Conductive Porous Substrate |
| 19b | Porous Composite Layer |
| 20,21 | Flow Channel |
| 22, 23 | Gasket |
| 24, 25 | Current Collector Plate |
| 26, 27 | Sheet Heater |
| 28, 29 | Insulator Plate |
| 30,31 | End Plate |
| 50 | Through Pore |
| 50a | Pore throat |
| 51 | Galwick Reagent |

**Claims**

1. A membrane electrode assembly for a fuel cell, comprising an anode, a cathode, and an electrolyte membrane disposed between the anode and the cathode,
the cathode including a cathode catalyst layer and a cathode diffusion layer disposed on the cathode catalyst layer, the cathode diffusion layer including a conductive porous substrate and a porous composite layer disposed on a surface of the conductive porous substrate,
the porous composite layer including conductive carbon particles and a water-repellent binding material, and the cathode diffusion layer having a plurality of through pores which have a largest pore diameter of 15 to 20.5 $\mu$m and a mean flow pore diameter of 3 to 10.5 $\mu$m in pore throat size distribution determined by a half dry/bubble point method.

2. The membrane electrode assembly for a fuel cell in accordance with claim 1, wherein the largest pore diameter is 15 to 20 $\mu$m, and the mean flow pore diameter is 3 to 10 $\mu$m.

3. The membrane electrode assembly for a fuel cell in accordance with claim 1 or 2, wherein the pressure required for water to pass through the cathode diffusion layer is 5 to 17 kPa.

4. The membrane electrode assembly for a fuel cell in accordance with any one of claims 1 to 3, wherein the amount of the porous composite layer disposed on the surface of the conductive porous substrate per projected unit area is 0.8 to 2.7 mg/cm$^2$.

5. The membrane electrode assembly for a fuel cell in accordance with any one of claims 1 to 4, wherein the porous composite layer is embedded in the conductive porous substrate, and the depth of the embedded part of the porous composite layer is 7% or less of the thickness of the conductive porous substrate.

6. The membrane electrode assembly for a fuel cell in accordance with any one of claims 1 to 5, wherein the content of the water-repellent binding material in the porous composite layer is 5 to 65% by weight.

7. The membrane electrode assembly for a fuel cell in accordance with any one of claims 1 to 6, wherein the water-repellent binding material comprises polytetrafluoroethylene.

8. The membrane electrode assembly for a fuel cell in accordance with any one of claims 1 to 7, wherein the porous composite layer is formed by applying a dispersion including the conductive carbon particles, the water-repellent binding material, and water onto a surface of the conductive porous substrate, drying it, and baking it, and the water content in the dispersion is 20 to 60% by weight.

9. The membrane electrode assembly for a fuel cell in accordance with claim 8, wherein the baking temperature is 350 to 400 °C.

10. The membrane electrode assembly for a fuel cell in accordance with any one of claims 1 to 9, wherein the conductive porous substrate includes a conductive porous material and a water-repellent material adhering to the conductive porous material.

11. The membrane electrode assembly for a fuel cell in accordance with claim 10, wherein the content of the water-repellent material is 5 to 40% by weight of the whole conductive porous substrate.

12. A fuel cell comprising at least one unit cell which includes the membrane electrode assembly of any one of claims 1 to 11 for a fuel cell, an anode-side separator in contact with the anode, and a cathode-side separator in contact with the cathode.

FIG. 1

FIG. 2

FIG. 3

FIG. 4

(a) Region I

Air

51 19

(b) Region II

50

51

(c) Region III

FIG. 5

Air flow rate

I II III

B

A

L_D

L_W

$(L_D = 2 \times L_W)$

P₀ P₁/₂ Air pressure

FIG. 6

FIG. 7

<center>**INTERNATIONAL SEARCH REPORT**</center>

| | International application No. |
|---|---|
| | PCT/JP2010/006100 |

**A. CLASSIFICATION OF SUBJECT MATTER**
*H01M4/86*(2006.01)i, *H01M8/10*(2006.01)i

According to International Patent Classification (IPC) or to both national classification and IPC

**B. FIELDS SEARCHED**

Minimum documentation searched (classification system followed by classification symbols)
H01M4/86, H01M8/10

Documentation searched other than minimum documentation to the extent that such documents are included in the fields searched
Jitsuyo Shinan Koho        1922-1996    Jitsuyo Shinan Toroku Koho    1996-2011
Kokai Jitsuyo Shinan Koho   1971-2011    Toroku Jitsuyo Shinan Koho    1994-2011

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2009-032687 A  (Nissan Motor Co., Ltd.), 12 February 2009 (12.02.2009), claims (Family: none) | 1-12 |
| A | JP 2008-311181 A  (Mitsubishi Rayon Co., Ltd.), 25 December 2008 (25.12.2008), claims (Family: none) | 1-12 |
| A | JP 2007-220731 A  (Sekisui Chemical Co., Ltd.), 30 August 2007 (30.08.2007), claims (Family: none) | 1-12 |

☒ Further documents are listed in the continuation of Box C.   ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 04 January, 2011 (04.01.11) | 18 January, 2011 (18.01.11) |

| Name and mailing address of the ISA/ Japanese Patent Office | Authorized officer |
|---|---|
| Facsimile No. | Telephone No. |

Form PCT/ISA/210 (second sheet) (July 2009)

**INTERNATIONAL SEARCH REPORT**

| International application No. |
|---|
| PCT/JP2010/006100 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2004-296176 A  (Toray Industries, Inc.),<br>21 October 2004 (21.10.2004),<br>claims<br>(Family: none) | 1-12 |
| A | JP 07-176307 A  (Fuji Electric Co., Ltd.),<br>14 July 1995 (14.07.1995),<br>claims<br>(Family: none) | 1-12 |
| E,A | JP 2010-244791 A  (Panasonic Corp.),<br>28 October 2010 (28.10.2010),<br>claims<br>(Family: none) | 1-12 |

Form PCT/ISA/210 (continuation of second sheet) (July 2009)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007087651 A
- JP 2008108507 A
- JP 2008147145 A